# EUROPÄISCHE PATENTSCHRIFT

(11) **EP 3 105 091 B1**
(45) Veröffentlichungstag und Bekanntmachung des Hinweises auf die Patenterteilung: **14.03.2018**
(21) Anmeldenummer: 15702726.9
(22) Anmeldetag: 29.01.2015
(51) Int. Cl.: B60T 10/02, F16D 57/04

(54) **HYDRODYNAMISCHER RETARDER**
HYDRODYNAMIC RETARDER
RALENTISSEUR HYDRODYNAMIQUE

(30) Priorität: 10.02.2014 DE 102014202366
(43) Veröffentlichungstag der Anmeldung: 21.12.2016
(73) Patentinhaber: Voith Patent GmbH, 89522 Heidenheim (DE)
(72) Erfinder: LAUKEMANN, Dieter, 74564 Crailsheim (DE)
(86) Internationale Anmeldenummer: PCT/EP2015/051776
(87) Internationale Veröffentlichungsnummer: WO 2015/117880

(56) Entgegenhaltungen:
- WO-A1-03/008832
- DE-A1- 10 251 968
- DE-A1-102006 021 331

## Beschreibung

Die vorliegende Erfindung betrifft eine hydrodynamische Maschine, insbesondere einen hydrodynamischer Retarder gemäß dem Oberbegriff von Anspruch 1.

Aus der DE 10 2006 021 331 A1 ist eine gattungsgemäße hydrodynamische Maschine, insbesondere ein hydrodynamischer Retarder bekannt, bei welchem zur Reduzierung des Füllungsgrades des Arbeitsraumes im Nichtbremsbetrieb eine Absaugvorrichtung in Form einer sogenannten Seitenkanalpumpe vorgesehen ist, die in arbeitsmediumleitender Verbindung mit dem Arbeitsraum des hydrodynamischen Retarders steht, um Arbeitsmedium aktiv aus dem Arbeitsraum abzusaugen. Eine solche Seitenkanalpumpe weist ein Pumpenlaufrad mit einer Vielzahl von Pumpenschaufeln auf, sowie einen in Umfangsrichtung des Pumpenlaufrads und damit in Umfangsrichtung der hydrodynamischen Maschine verlaufenden Kanal mit einem Eintrittsende und einem Austrittsende, wobei die Pumpenschaufeln derart in dem Kanal oder diesem gegenüberstehend angeordnet sind, dass bei einem Umlaufen des Pumpenlaufrads eine Förderwirkung in dem Kanal erzeugt wird, um hierdurch Arbeitsmedium und/oder ein Arbeitsmediumluftgemisch im Nichtbremsbetrieb aus dem Arbeitsraum des hydrodynamischen Retarders zu saugen. Demgemäß ist ein Eintrittsende des Kanals der Seitenkanalpumpe arbeitsmediumleitend mit dem Arbeitsraum verbunden.

Gemäß der DE 10 2006 021 331 A1 wird vorgeschlagen, das Pumpenlaufrad der Seitenkanalpumpe entweder einteilig mit dem Primärrad des hydrodynamischen Retarders auszuführen oder das Pumpenlaufrad auf einem Zapfen im Retardergehäuse zu lagern und über einen formschlüssigen Eingriff mit der Antriebswelle des Retarders anzutreiben. Auch wird eine fliegende Lagerung des Pumpenlaufrads auf der Antriebswelle des Retarders genannt.

Entsprechende Lagerungen werden auch in DE 10 2008 049 283 A1 beschrieben.

In der Praxis hat sich die Lagerung des Pumpenlaufrads der Seitenkanalpumpe im Retardergehäuse durchgesetzt. Durch diese Lagerung im Retardergehäuse, in welchem auch der Kanal der Seitenkanalpumpe ausgebildet ist, können sehr kleine Spalte zwischen dem Pumpenlaufrad und dem Gehäuse zur Abdichtung des Kanals vorgesehen werden, wobei in der Regel in den Spalten zusätzlich Dichtringe, beispielsweise Rechteckringe, vorgesehen sind, um Druckverluste zu vermeiden. Ein Nachteil der Konstruktion ist, dass die bekannte Lagerung der Seitenkanalpumpe empfindlich auf Trockenlauf reagiert und es somit zu Ausfällen kommen kann.

Der vorliegenden Erfindung liegt daher die Aufgabe zugrunde, eine hydrodynamische Maschine mit einer Seitenkanalpumpe anzugeben, bei welcher die Zuverlässigkeit der Seitenkanalpumpe verbessert werden kann, ohne die Möglichkeit der Herstellung minimaler Spalte zwischen dem Pumpenlaufrad und abdichtenden Flächen im Gehäuse zu reduzieren.

Die erfindungsgemäße Aufgabe wird durch eine hydrodynamische Maschine mit den Merkmalen von Anspruch 1 gelöst. In den abhängigen Ansprüchen sind vorteilhafte und besonders zweckmäßige Ausgestaltungen der Erfindung angegeben.

Eine erfindungsgemäße hydrodynamische Maschine, die insbesondere als hydrodynamischer Retarder ausgeführt ist, wobei die Erfindung jedoch beispielsweise auch bei hydrodynamischen Kupplungen oder hydrodynamischen Wandlern angewendet werden kann, weist ein beschaufeltes Primärrad und ein beschaufeltes Sekundärrad auf, die miteinander einen torusförmigen Arbeitsraum ausbilden, der mit einem Arbeitsmedium befüllbar ist, um darin eine hydrodynamische Kreislaufströmung zur Übertragung eines Antriebsmomentes, bei einem hydrodynamischen Retarder eines Bremsmomentes, auszubilden. Wenigstens eines der beiden beschaufelten Räder, beispielsweise das Primärrad, wird von einer Antriebswelle der hydrodynamischen Maschine, insbesondere des hydrodynamischen Retarders, angetrieben. Beispielsweise ist es einteilig mit der Antriebswelle ausgebildet oder wird von dieser als separates Bauteil getragen.

Bei Ausführung der hydrodynamischen Maschine als hydrodynamischer Retarder, kann das beschaufelte Sekundärrad als Stator ausgebildet sein, das heißt nicht umlaufen, oder als sogenannter Gegenlaufrotor, das heißt es wird in Gegenrichtung zum Primärrad angetrieben. Bei einer Ausführungsform der hydrodynamischen Maschine als hydrodynamische Kupplung treibt das Sekundärrad einen Abtrieb, insbesondere eine Abtriebswelle an, ebenso bei Ausführung als hydrodynamischer Wandler.

Erfindungsgemäß ist eine Seitenkanalpumpe vorgesehen, umfassend ein Pumpenlaufrad mit einer Vielzahl von Pumpenschaufeln und einen in Umfangsrichtung des Pumpenlaufrads verlaufenden Kanal mit einem Eintrittsende und einem Austrittsende, wie dies beispielsweise in der eingangs genannten DE 10 2006 021 331 A1 im Detail angegeben wird. Der Kanal ist beispielsweise im Gehäuse der hydrodynamischen Maschine ausgebildet, das heißt, die Kanalwände werden vom Gehäuse der hydrodynamischen Maschine oder von einem in dieses eingesetzten Bauteil gebildet.

Die Pumpenschaufeln des Pumpenlaufrads der Seitenkanalpumpe sind derart umlaufend in dem Kanal oder diesem gegenüberstehend angeordnet, dass bei einem Umlaufen des Pumpenlaufrads eine Förderwirkung in dem Kanal erzeugt wird. Diese Förderwirkung bewirkt an dem Eintrittsende des Kanals eine Saugwirkung und an dem Austrittsende eine Druckwirkung. Demgemäß kann nun das Eintrittsende in arbeitsmediumleitender Verbindung mit dem Arbeitsraum der hydrodynamischen Maschine stehen, um Arbeitsmedium oder ein Arbeitsmediumluftgemisch aus diesem abzusaugen. Dies kann im Leerlaufbetrieb der hydrodynamischen Maschine, bei einem hydrodynamischen Retarder im Nichtbremsbetrieb vorgesehen sein. Prinzipiell kann, wenn dies vorteilhaft ist, jedoch eine solche Absaugung auch im Bremsbetrieb des hydrodynamischen Retarders beziehungsweise allgemein im Nennbetrieb oder Teillastbetrieb der hydrodynamischen Maschine vorgesehen sein.

Prinzipiell kann die Seitenkanalpumpe auch zum Fördern von Arbeitsmedium in den Arbeitsraum verwendet werden, indem das Austrittsende des Kanals mit dem Arbeitsraum verbunden ist. Bezüglich des Betriebszustands, in welchem ein solches Fördern stattfindet, gilt das zuvor zum Absaugen gesagte.

Erfindungsgemäß ist nun das Pumpenlaufrad axial beweglich und/oder winklig verkippbar drehstarr auf der Antriebswelle der hydrodynamischen Maschine radialgelagert. Somit wird eine Drehmomentübertragung von der Antriebswelle auf das Pumpenlaufrad der Seitenkanalpumpe sichergestellt und zugleich eine axiale Verschiebung und/oder ein Winkelversatz des Pumpenlaufrads auf der Antriebswelle ermöglicht. Aufgrund der Radiallagerung des Pumpenlaufrads auf der Antriebswelle kann sich das Pumpenlaufrad hingegen in Radialrichtung beziehungsweise in einer Ebene senkrecht zur Antriebswelle beziehungsweise zu deren Drehachse nicht relativ zur Antriebswelle verlagern und ist vorteilhaft stets konzentrisch zu dieser positioniert.

Besonders vorteilhaft erfolgt die Axiallagerung des Pumpenlaufrads gegen das Gehäuse der hydrodynamischen Maschine, welches insbesondere als stationäres, das heißt nicht umlaufendes Gehäuse ausgeführt ist. In der Regel umschließt das Gehäuse zumindest das mittels der Antriebswelle angetriebene beschaufelte Rad, beispielsweise das Primärrad. Bei einem Retarder mit Ausführungsform des Sekundärrades als Stator ist dieser beispielsweise stationär im Gehäuse gelagert oder wird durch dieses gebildet. Bei einer Ausführungsform als hydrodynamische Kupplung kann das Gehäuse als stationäres Gehäuse beide Laufräder umschließen oder zusammen mit einem der beiden Laufräder umlaufen und das andere Laufrad umschließen.

Durch die axiale Lagerung des Pumpenlaufrads im Gehäuse der hydrodynamischen Maschine können besonders kleine Spalte zwischen dem Pumpenlaufrad und dem Gehäuse, in dem vorteilhaft der Kanal der Seitenkanalpumpe ausgebildet ist, erreicht werden, was zu einem hohen Wirkungsgrad der Seitenkanalpumpe führt.

Das Pumpenlaufrad der Seitenkanalpumpe ist vorteilhaft über eine Bogenzahnkupplung auf der Antriebswelle gelagert. Eine solche Bogenzahnkupplung lässt vorteilhaft die genannte axiale Verschiebung und/oder den Winkelversatz des Pumpenlaufrads auf der Antriebswelle zu.

Gemäß einer besonders vorzuziehenden Ausführungsform weist die Bogenzahnkupplung einen ersten Zahnkranz mit einer Außenverzahnung und einen zweiten Zahnkranz mit einer Innenverzahnung auf, wobei sich die beiden Zahnkränze einander in Radialrichtung umschließen, sodass die Innenverzahnung mit der Außenverzahnung in einer senkrecht zur Drehachse beziehungsweise zur Antriebswelle verlaufenden Ebene kämmt. Bei einer winkligen Verlagerung kann die Ebene auch schräg zur Drehachse verlaufen.

Einer der beiden Zahnkränze, insbesondere der erste Zahnkranz, kann auf der Antriebswelle montiert oder einteilig mit dieser ausgeführt sein und der andere der beiden Zahnkränze, insbesondere der zweite Zahnkranz, kann am Pumpenlaufrad der Seitenkanalpumpe montiert oder einteilig mit diesem ausgeführt sein.

Besonders günstig ist es, wenn die Außenverzahnung Zähne mit einem balligen Zahnkopf aufweist. Die Innenverzahnung kann dann Zahnlücken mit einem konkaven Zahngrund, der insbesondere gegengleich zum balligen Zahnkopf ausgeführt ist, oder mit einem ebenen oder zumindest in Richtung der Drehachse geradlinigen beziehungsweise ebenen Zahngrund aufweisen, um die gewünschte Winkelversatzmöglichkeit des Pumpenlaufrads auf der Antriebswelle zu ermöglichen. Gemäß einer Ausführungsform ist der Zahngrund der Innenverzahnung, der Außenverzahnung und/oder der Zahnkopf der Innenverzahnung ballig ausgeführt.

Gemäß einer vorteilhaften Ausführungsform der Erfindung ist das Pumpenlaufrad mittels wenigstens eines Gleitringes gegen das Gehäuse abgedichtet, insbesondere in Axialrichtung. Die Axialrichtung entspricht dabei der Richtung der Drehachse der hydrodynamischen Maschine beziehungsweise von deren Antriebswelle.

Besonders günstig ist es, wenn der Gleitring in Axialrichtung verschiebbar durch das Pumpenlaufrad oder das Gehäuse getragen wird, um Relativbewegungen im Betrieb oder Toleranzen bei der Herstellung zu überbrücken.

Beispielsweise ist der Gleitring drehstarr am Pumpenlaufrad oder am Gehäuse angeschlossen und insbesondere durch Formschluss mittels wenigstens einer Hinterschneidung fixiert. Selbstverständlich kommt auch ein Reibschluss oder ein Stoffschluss in Betracht. Beispielsweise erfolgt die Drehmomentabstützung formschlüssig über Laschen am Gleitring, die sich in Aussparungen am Pumpenlaufrad oder am Gehäuse abstützen.

Der Gleitring und/oder das Pumpenlaufrad können aus Kunststoff hergestellt sein. Insbesondere im letzteren Fall kann auf ein separates Axiallager zur Axiallagerung des Pumpenlaufrads im Gehäuse verzichtet werden.

Beispielsweise wird einer der beiden Zahnkränze, insbesondere der erste Zahnkranz mit der Außenverzahnung, auf einen Zapfen der Antriebswelle aufgepresst, nachdem er separat zu dieser hergestellt wurde, insbesondere als Sinterteil.

Die Erfindung soll nachfolgend anhand eines Ausführungsbeispiels exemplarisch beschrieben werden.

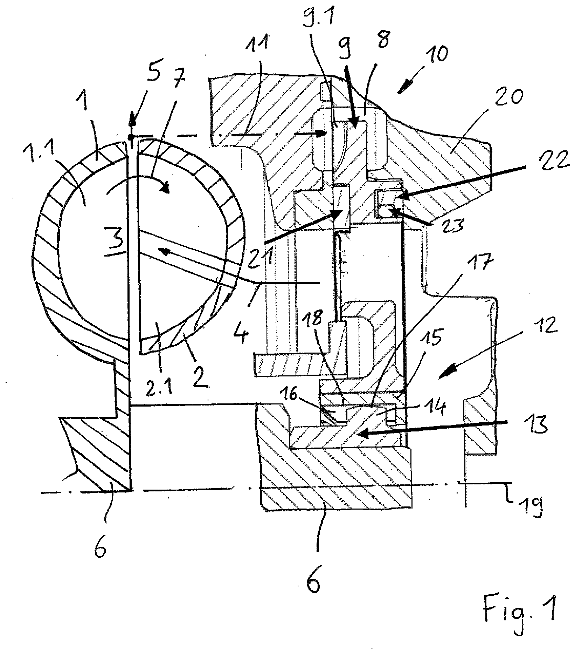

In der Figur 1 ist in einer schematischen Darstellung eine erfindungsgemäße hydrodynamische Maschine mit einem Primärrad 1 und einem Sekundärrad 2 dargestellt. Das Primärrad 1 weist eine Vielzahl von Primärradschaufeln 1.1 auf und das Sekundärrad 2 weist eine Vielzahl von Sekundärradschaufeln 2.1 auf, die in einem gemeinsamen vom Primärrad 1 und dem Sekundärrad 2 ausgebildeten Arbeitsraum 3 positioniert sind. Das Arbeitsmedium wird dem Arbeitsraum 3 über einen Arbeitsmediumzulauf 4 zugeführt und aus diesem über einen Arbeitsmediumablauf 5 abgeführt. Der Arbeitsmediumablauf 5 ist nur schematisch dargestellt und könnte beispielsweise durch das Sekundärrad 2 verlaufen. Durch Drehantrieb des Primärrades 1 mittels der Antriebswelle 6 stellt sich eine hydrodynamische Kreislaufströmung des Arbeitsmediums im Arbeitsraum 3 ein, siehe den Pfeil 7.

Um insbesondere im ausgeschalteten Zustand beziehungsweise im Leerlauf der hydrodynamischen Maschine einen Unterdruck im Arbeitsraum 3 herstellen zu können, steht dieser in arbeitsmediumleitender Verbindung mit dem Kanal 8 beziehungsweise einem hier nicht näher dargestellten Eintrittsende des Kanals 8 einer Seitenkanalpumpe 10. Die Förderwirkung wird durch Umlaufen des Pumpenlaufrads 9 der Seitenkanalpumpe 10 in dem Kanal 8 erzeugt. In der arbeitsmediumleitenden Verbindung 11 zwischen dem Arbeitsraum 3 und dem Kanal 8 der Seitenkanalpumpe 10 könnte, auch wenn dies hier nicht dargestellt ist, gemäß einer besonderen Ausführungsform auch ein Ventil vorgesehen sein, um diese arbeitsmediumleitende Verbindung 11 wahlweise zu öffnen und zu schließen.

Im gezeigten Ausführungsbeispiel sind die Pumpenschaufeln 9.1 des Pumpenlaufrads 9 in Axialrichtung seitlich am Pumpenlaufrad 9 ausgebildet, insbesondere derart, dass sie eine Axial-Radial-Strömung erzeugen. Dies könnte jedoch auch anders ein.

Das Pumpenlaufrad 9 ist über eine Bogenzahnkupplung 12 auf der Antriebswelle 6 radialgelagert. Die Bogenzahnkupplung 12 weist einen ersten Zahnkranz 13 mit einer Außenverzahnung 14 und einen zweiten Zahnkranz 15 mit einer Innenverzahnung 16 auf. Die Außenverzahnung 14 weist, wie man sieht, einen balligen Zahnkopf 17 auf, wohingegen die Innenverzahnung 16 in Richtung der Drehachse 19 der Antriebswelle 6 gesehen einen geradlinigen beziehungsweise ebenen Zahngrund 18 aufweist. Somit kann der zweite Zahnkranz 15 auf dem konvexen Zahnkopf 17 verkippen, um Verlagerungen der Antriebswelle 6 relativ zum Gehäuse 20 der hydrodynamischen Maschine auszugleichen.

Um das Pumpenlaufrad 9 stets in der gewünschten Position ausgerichtet zum Gehäuse 20 zu halten, insbesondere um eine Axialverlagerung des Pumpenlaufrads 9 gegenüber dem Gehäuse 20 zu vermeiden, ist dieses im Gehäuse 20 über ein Axiallager 21, hier in Form eines Gleitlagers, axialgelagert. Dieses Axiallager 21 kann zugleich eine Abdichtung zwischen der einen axialen Seite des Pumpenlaufrads 9 und dem Gehäuse 20 erreichen. Im gezeigten Ausführungsbeispiel ist auf der anderen axialen Seite des Pumpenlaufrads 9 ein Gleitring 22 im Pumpenlaufrad 9 eingesetzt, der in Axialrichtung, das heißt in Richtung der Drehachse 19, elastisch vorgespannt gegen das Gehäuse 20 beweglich ist. Der Gleitring 22 ist im gezeigten Ausführungsbeispiel zusätzlich über einen O-Ring 23 gegen die Oberfläche der Aussparung im Pumpenlaufrad 9 abgedichtet.

## Patentansprüche

1. Hydrodynamische Maschine, insbesondere hydrodynamischer Retarder, mit einem beschaufelten Primärrad (1) und einem beschaufelten Sekundärrad (2), die miteinander einen torusförmigen Arbeitsraum (3) ausbilden, der mit einem Arbeitsmedium befüllbar ist, um darin eine hydrodynamische Kreislaufströmung (7) zur Übertragung eines Antriebsmomentes auszubilden; wobei wenigstens eines der beiden beschaufelten Räder (1, 2) von einer Antriebswelle (6) der hydrodynamischen Maschine über einer Drehachse (19) angetrieben wird;
1.1 mit einer Seitenkanalpumpe (10), umfassend ein Pumpenlaufrad (9) mit einer Vielzahl von Pumpenschaufeln (9.1) und einen in Umfangsrichtung des Pumpenlaufrads (9) verlaufenden Kanal (8) mit einem Eintrittsende und einem Austrittsende, wobei die Pumpenschaufeln (9.1) derart in dem Kanal (8) oder diesem gegenüberstehend angeordnet sind, das bei einem Umlaufen des Pumpenlaufrads (9) eine Förderwirkung derart in dem Kanal (8) erzeugt wird, dass an dem Eintrittsende eine Saugwirkung und an dem Austrittsende eine Druckwirkung erzeugt wird; und
1.2 das Eintrittsende oder das Austrittsende in arbeitsmediumleitender Verbindung (11) mit dem Arbeitsraum (3) steht;
**dadurch gekennzeichnet, dass**
1.3 das Pumpenlaufrad (9) axial beweglich und/oder winklig verkippbar drehstarr auf der Antriebswelle (6) radialgelagert ist.

2. Hydrodynamische Maschine gemäß Anspruch 1, **dadurch gekennzeichnet, dass** die hydrodynamische Maschine ein stationäres Gehäuse (20) aufweist, welches insbesondere zumindest das mittels der Antriebswelle (6) angetriebene beschaufelte Rad (1.2) umschließt, und dadurch, dass das Pumpenlaufrad (9) im Gehäuse (20) axialgelagert ist.

3. Hydrodynamische Maschine gemäß einem der Ansprüche 1 oder 2,
**dadurch gekennzeichnet, dass** das Pumpenlaufrad (9) über eine Bogenzahnkupplung (12) auf der Antriebswelle (6) gelagert ist.

4. Hydrodynamische Maschine gemäß Anspruch 3, **dadurch gekennzeichnet, dass** die Bogenzahnkupplung (12) einen ersten Zahnkranz (13) mit einer Außenverzahnung (14) und einen zweiten Zahnkranz (15) mit einer Innenverzahnung (16) aufweist, die einander in Radialrichtung umschließen, sodass die Innenverzahnung (16) mit der Außenverzahnung (14) in einer senkrecht oder winklig zur Drehachse (19) verlaufenden Ebene kämmt, wobei einer der beiden Zahnkränze (13, 15), insbesondere der erste Zahnkranz (13), auf der Antriebswelle (6) montiert oder einteilig mit dieser ausgeführt ist und der andere der beiden Zahnkränze (13, 15), insbesondere der zweite Zahnkranz (15), am Pumpenlaufrad (9) montiert oder einteilig mit diesem ausgeführt ist.

5. Hydrodynamische Maschine gemäß Anspruch 4, **dadurch gekennzeichnet, dass** die Außenverzahnung (14) Zähne mit einem balligen Zahnkopf (17) aufweist.

6. Hydrodynamische Maschine gemäß Anspruch 5, **dadurch gekennzeichnet, dass** die Innenverzahnung (16) Zahnlücken mit einem ebenen oder in Richtung der Drehachse (19) geradlinigen Zahngrund (18) aufweist.

7. Hydrodynamische Maschine gemäß einem der Ansprüche 1 bis 6, **dadurch gekennzeichnet, dass** das Pumpenlaufrad (9) mittels wenigstens eines Gleitrings (22) gegen das Gehäuse (20) abgedichtet ist, insbesondere in Axialrichtung.

8. Hydrodynamische Maschine gemäß Anspruch 7, **dadurch gekennzeichnet, dass** der Gleitring (22) in Axialrichtung verschiebbar durch das Pumpenlaufrad (9) oder das Gehäuse (20) getragen wird.

9. Hydrodynamische Maschine gemäß einem der Ansprüche 7 oder 8,
**dadurch gekennzeichnet, dass** der Gleitring (22) drehstarr am Pumpenlaufrad (9) oder am Gehäuse (20) angeschlossen ist, insbesondere durch Formschluss mittels wenigstens einer Hinterschneidung.

10. Hydrodynamische Maschine gemäß einem der Ansprüche 7 bis 9, **dadurch gekennzeichnet, dass** der Gleitring (22) und/oder das Pumpenlaufrad (9) aus Kunststoff hergestellt ist.

## Claims

1. Hydrodynamic machine, in particular hydrodynamic retarder, with a vaned primary wheel (1) and a vaned secondary wheel (2), which together form a toroidal working chamber (3) that can be filled with a working medium in order to form therein a hydrodynamic circuit flow (7) for transmission of a drive moment; wherein at least one of the two vaned wheels (1, 2) is driven by a drive shaft (6) of the hydrodynamic machine via a rotary axis (19) ;
1.1 with a side channel pump (10) comprising a pump impeller (9) with a plurality of pump vanes (9.1) and a channel (8) running in the circumferential direction of the pump impeller (9), with an inlet end and an outlet end, wherein the pump vanes (9.1) are arranged in or relative to the channel (8) such that on rotation of the pump impeller (9), a delivery effect is generated in the channel (8) such that at the inlet end a suction effect and at the outlet end a pressure effect is generated; and
1.2 the inlet end or outlet end is in working-medium-conductive connection (11) with the working chamber (3);
**characterized in that**
1.3 the pump impeller (9) is radially mounted, axially moveably and/or angularly tiltably, rotationally fixedly on the drive shaft (6).

2. Hydrodynamic machine according to Claim 1, **characterized in that** the hydrodynamic machine comprises a stationary housing (20) which in particular surrounds at least the vaned wheel (1.2) driven by means of the drive shaft (6), and that the pump impeller (9) is axially mounted in the housing (20).

3. Hydrodynamic machine according to one of Claims 1 or 2, **characterized in that** the pump impeller (9) is mounted on the drive shaft (6) via a curved-tooth coupling (12).

4. Hydrodynamic machine according to Claim 3, **characterized in that** the curved-tooth coupling (12) has a first gear ring (13) with external toothing (14) and a second gear ring (15) with internal toothing (16) which surround each other in the radial direction so that the internal toothing (16) meshes with the external toothing (14) in a plane running perpendicular to or angled to the rotary axis (19), wherein one of the two gear rings (13, 15), in particular the first gear ring (13), is mounted on or configured integrally with the drive shaft (6) and the other of the two gear rings (13, 15), in particular the second gear ring (15), is mounted on or configured integrally with the pump impeller (9).

5. Hydrodynamic machine according to Claim 4, **characterized in that** the external toothing (14) has teeth with a crowned tooth head (17).

6. Hydrodynamic machine according to Claim 5, **characterized in that** the internal toothing (16) has tooth gaps with a tooth base (18) which is flat or rectilinear in the direction of the rotary axis (19).

7. Hydrodynamic machine according to any of Claims 1 to 6, **characterized in that** the pump impeller (9) is sealed against the housing (20) by means of at least one slip ring (22), in particular in the axial direction.

8. Hydrodynamic machine according to Claim 7, **characterized in that** the slip ring (22) is carried moveably in the axial direction by the pump impeller (9) or the housing (20).

9. Hydrodynamic machine according to one of Claims 7 or 8, **characterized in that** the slip ring (22) is connected rotationally fixedly to the pump impeller (9) or the housing (20), in particular by form fit by means of at least one undercut.

10. Hydrodynamic machine according to any of Claims 7 to 9, **characterized in that** the slip ring (22) and/or the pump impeller (9) is made of plastic.

## Revendications

1. Machine hydrodynamique, en particulier ralentisseur hydrodynamique, avec une roue primaire à aubes (1) et une roue secondaire à aubes (2), qui forment l'une avec l'autre une chambre de travail toroïdale (3), qui peut être remplie avec un fluide de travail, afin de former dans celle-ci un écoulement circulaire hydrodynamique (7) en vue de la transmission d'un couple d'entraînement; dans laquelle au moins une des deux roues à aubes (1, 2) est entraînée par un arbre d'entraînement (6) de la machine hydrodynamique autour d'un axe de rotation (19);
1.1 avec une pompe de canal latérale (10), comprenant une roue mobile de pompe (9) avec une multiplicité d'aubes de pompe (9.1) et un canal (8) s'étendant dans la direction périphérique de la roue mobile de pompe (9) avec une extrémité d'entrée et une extrémité de sortie, dans laquelle les aubes de pompe (9.1) sont disposées dans le canal (8) ou en face de celui-ci, de telle manière que lors d'une rotation de la roue mobile de pompe (9) il se produise dans le canal (8) une action de transport de telle manière qu'il apparaisse un effet d'aspiration à l'extrémité d'entrée et un effet de pression à l'extrémité de sortie; et
1.2 l'extrémité d'entrée ou l'extrémité de sortie est en liaison de conduite du fluide de travail (11) avec la chambre de travail (3);
**caractérisée en ce que**
1.3 la roue mobile de pompe (9) est montée de façon mobile axialement et/ou inclinable angulairement radialement calée en rotation sur l'arbre d'entraînement (6).

2. Machine hydrodynamique selon la revendication 1, **caractérisée en ce que** la machine hydrodynamique présente une enceinte stationnaire (20), qui entoure en particulier au moins la roue à aubes (1, 2) entraînée au moyen de l'arbre d'entraînement (6), et **en ce que** la roue à aubes de pompe (9) est montée axialement dans l'enceinte (20).

3. Machine hydrodynamique selon une des revendications 1 ou 2, **caractérisée en ce que** la roue mobile de pompe (9) est montée sur l'arbre d'entraînement (6) au moyen d'un embrayage à denture courbe (12).

4. Machine hydrodynamique selon la revendication 3, **caractérisée en ce que** l'embrayage à denture courbe (12) présente une première couronne dentée (13) avec une denture extérieure (14) et une deuxième couronne dentée (15) avec une denture intérieure (16), qui s'entourent l'une l'autre en direction radiale, de telle manière que la denture intérieure (16) engrène avec la denture extérieure (14) dans un plan s'étendant perpendiculairement ou angulairement par rapport à l'axe de rotation (19), dans laquelle une des deux couronnes dentées (13, 15), en particulier la première couronne dentée (13), est montée sur l'arbre d'entraînement (6) ou est réalisée d'une seule pièce avec celui-ci, et l'autre des deux couronnes dentées (13, 15), en particulier la deuxième couronne dentée (15), est montée sur la roue mobile de pompe (9) ou est formée d'une seule pièce avec celle-ci.

5. Machine hydrodynamique selon la revendication 4, **caractérisée en ce que** la denture extérieure (14) présente des dents avec une tête de dent bombée (17).

6. Machine hydrodynamique selon la revendication 5, **caractérisée en ce que** la denture intérieure (16) présente des entredents avec un fond de dent (18) plan ou rectiligne dans la direction de l'axe de rotation (19).

7. Machine hydrodynamique selon l'une quelconque des revendications 1 à 6, **caractérisée en ce que** la roue mobile de pompe (9) est étanche par rapport à l'enceinte (20), en particulier en direction axiale, au moyen d'au moins un joint glissant (22).

8. Machine hydrodynamique selon la revendication 7, **caractérisée en ce que** le joint glissant (22) est supporté de façon déplaçable en direction axiale par la roue mobile de pompe (9) ou par l'enceinte (20).

9. Machine hydrodynamique selon une des revendications 7 ou 8, **caractérisée en ce que** le joint glissant (22) est raccordé de façon calée en rotation à la roue mobile de pompe (9) ou à l'enceinte (20), en particulier par emboîtement au moyen d'au moins une contre-dépouille.

10. Machine hydrodynamique selon l'une quelconque des revendications 7 à 9, **caractérisée en ce que** le joint glissant (22) et/ou la roue mobile de pompe (9) est fabriqué(e) en matière synthétique.
